(19) Europäisches Patentamt
European Patent Office
Office européen des brevets

(11) EP 4 494 874 A1

(12) EUROPEAN PATENT APPLICATION
published in accordance with Art. 153(4) EPC

(43) Date of publication:
22.01.2025 Bulletin 2025/04

(21) Application number: 23791682.0

(22) Date of filing: 05.04.2023

(51) International Patent Classification (IPC):
$B33Y\ 10/00^{(2015.01)}$     $B33Y\ 30/00^{(2015.01)}$
$B33Y\ 50/00^{(2015.01)}$     $B33Y\ 50/02^{(2015.01)}$
$B23K\ 9/04^{(2006.01)}$     $B23K\ 31/00^{(2006.01)}$
$B22F\ 10/80^{(2021.01)}$

(52) Cooperative Patent Classification (CPC):
B22F 10/80; B23K 9/04; B23K 31/00; B33Y 10/00;
B33Y 30/00; B33Y 50/00; B33Y 50/02

(86) International application number:
PCT/JP2023/014151

(87) International publication number:
WO 2023/204031 (26.10.2023 Gazette 2023/43)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 20.04.2022 JP 2022069534

(71) Applicant: KABUSHIKI KAISHA KOBE SEIKO
SHO (KOBE STEEL, LTD.)
Hyogo 651-8585 (JP)

(72) Inventors:
• TSUBAKI, Shota
  Kobe-shi, Hyogo 651-2271 (JP)
• KATAOKA, Yasuto
  Kobe-shi, Hyogo 651-2271 (JP)
• HUANG, Shuo
  Kobe-shi, Hyogo 651-2271 (JP)
• CHIKAGUCHI, Satoshi
  Kobe-shi, Hyogo 651-2271 (JP)

(74) Representative: Müller-Boré & Partner
Patentanwälte PartG mbB
Friedenheimer Brücke 21
80639 München (DE)

(54) METHOD FOR MANAGING QUALITY OF ADDITIVELY MANUFACTURED OBJECT, APPARATUS FOR MANAGING QUALITY OF ADDITIVELY MANUFACTURED OBJECT, PROGRAM, WELDING CONTROL APPARATUS, AND WELDING APPARATUS

(57) A quality control method for an additively manufactured object includes: a step of acquiring a limit value of a stress intensity factor of the additively manufactured object; a step of obtaining an allowable defect dimension of a defect present in the additively manufactured object by using a variation range of a load stress assumed in design of the additively manufactured object and a condition value including the limit value; a step of setting, as a defect dimension, any one of a predicted value of a defect dimension of a defect that is capable of being generated in the additively manufactured object when the additively manufactured object is manufactured based on the building plan and a measured value of a defect dimension of a defect generated in a test specimen manufactured based on the building plan; and a step of comparing the defect dimension with the allowable defect dimension to determine quality of the beads or the additively manufactured object.

FIG. 2

QUALITY CONTROL DEVICE — 130

LIMIT VALUE ACQUISITION UNIT — 31

ALLOWABLE DEFECT DIMENSION SETTING UNIT — 33

DEFECT DIMENSION SETTING UNIT — 35

DETERMINATION UNIT — 37

REPAIR INSTRUCTION UNIT — 39

**Description**

TECHNICAL FIELD

The present invention relates to a quality control method for an additively manufactured object, a quality control device for an additively manufactured object, a program, a welding control device, and a welding device.

BACKGROUND ART

A metal additive manufacturing technique is known as one of metalworking techniques called additive manufacturing. In the metal additive manufacturing technique, a three-dimensional additively manufactured object can be manufactured by depositing sliced two-dimensional layers one by one based on three-dimensional data such as 3D-CAD. During the manufacturing the additively manufactured object, a shape of the built object is measured by a sensor, and building conditions for a next layer to be formed are adjusted according to a measurement result, thereby improving quality of the additively manufactured object.

In the quality control for such an additively manufactured object, Patent Literature 1 discloses a technique of associating data measured by a sensor during building with load information and force flow information, and classifying and determining measured values made by the sensor from the viewpoint of influence on the quality.

CITATION LIST

PATENT LITERATURE

Patent Literature 1: JP 2019-194031A

SUMMARY OF INVENTION

TECHNICAL PROBLEM

In the above-described metal additive manufacturing, defects due to a lack of fusion of metal or the like may be generated in the process of repeatedly depositing the metal. The defects include harmful defects that have a fatal influence on the quality and harmless defects that do not particularly affect the required specifications of the additively manufactured object. A criteria for determining whether a defect is harmful or harmless is usually set according to quality assurance or control criteria. It is preferred to specify the criteria before building, rather than clarifying the criteria by conducting various tests after actual building, and it is easy to make a good building plan.

However, it is difficult to predict the quality of the additively manufactured object from a stage of the building plan before manufacture. In Patent Literature 1, a position of insufficient melting is specified based on a sensor value obtained by detecting a shape and size of an actual melting spot, it is determined that there is a defect when the specified position is present in a load support region or a critical load region, and no quality evaluation is made at the stage of the building plan.

Therefore, an object of the present invention is to provide a quality control method for an additively manufactured object, a quality control device for an additively manufactured object, a program, a welding control device, and a welding device capable of predicting quality of the additively manufactured object at a stage of a building plan before manufacture.

SOLUTION TO PROBLEM

The present invention includes the following constitutions.

(1) A quality control method for an additively manufactured object obtained by repeatedly depositing beads formed by melting and solidifying a filler metal in a layered manner based on a predetermined building plan, the quality control method including:

acquiring a limit value of a stress intensity factor of the additively manufactured object;
obtaining an allowable defect dimension of a defect present in the additively manufactured object by using a variation range of a load stress assumed in design of the additively manufactured object and a condition value including the limit value;
setting, as a defect dimension, any one of a predicted value of a defect dimension of a defect that is capable of being generated in the additively manufactured object when the additively manufactured object is manufactured based on the building plan and a measured value of a defect dimension of a defect generated in a test specimen manufactured based on the building plan; and

comparing the defect dimension with the allowable defect dimension to determine quality of the beads or the additively manufactured object.

(2) A program for causing a computer to execute procedures of a quality control method for an additively manufactured object obtained by repeatedly depositing beads formed by melting and solidifying a filler metal in a layered manner based on a predetermined building plan, the program for causing the computer to execute:

a procedure of acquiring a limit value of a stress intensity factor of the additively manufactured object;

a procedure of obtaining an allowable defect dimension of a defect present in the additively manufactured object by using a variation range of a load stress assumed in design of the additively manufactured object and a condition value including the limit value;

a procedure of setting, as a defect dimension, any one of a predicted value of a defect dimension of a defect that is capable of being generated in the additively manufactured object when the additively manufactured object is manufactured based on the building plan and a measured value of a defect dimension of a defect generated in a test specimen manufactured based on the building plan; and

a procedure of comparing the defect dimension with the allowable defect dimension to determine quality of the beads or the additively manufactured object.

(3) A quality control device for an additively manufactured object obtained by repeatedly depositing beads formed by melting and solidifying a filler metal in a layered manner based on a predetermined building plan, the quality control device including:

a limit value acquisition unit configured to acquire a limit value of a stress intensity factor of the additively manufactured object;

an allowable defect dimension setting unit configured to obtain an allowable defect dimension of a defect present in the additively manufactured object by using a variation range of a load stress assumed in design of the additively manufactured object and a condition value including the limit value;

a defect dimension setting unit configured to set, as a defect dimension, any one of a predicted value of a defect dimension of a defect that is capable of being generated in the additively manufactured object when the additively manufactured object is manufactured based on the building plan and a measured value of a defect dimension of a defect generated in a test specimen manufactured based on the building plan; and

a determination unit configured to compare the defect dimension with the allowable defect dimension to determine quality of the beads or the additively manufactured object.

(4) A welding control device including:

the quality control device for an additively manufactured object according to (3); and

a control unit configured to control continuation or stop of arc welding according to a result of the quality determination output from the quality control device.

(5) A welding device including:

the welding control device according to (4); and

a welding robot configured to perform arc welding.

ADVANTAGEOUS EFFECTS OF INVENTION

According to the present invention, it is possible to predict the quality of the additively manufactured object at a stage of the building plan before manufacture.

BRIEF DESCRIPTION OF DRAWINGS

[FIG. 1] FIG. 1 is an overall configuration diagram of a welding device.
[FIG. 2] FIG. 2 is a schematic functional block diagram of a control information generation device.
[FIG. 3] FIG. 3 is a flowchart illustrating a procedure of a control information generation method.

[FIG. 4] FIG. 4 is a graph schematically illustrating a relation between a crack growth rate and a stress intensity factor range.

[FIG. 5] FIG. 5 is a diagram illustrating a state in which beads of an additively manufactured object are deposed in a cross-sectional shape.

[FIG. 6] FIG. 6 is a cross-sectional view schematically illustrating one narrow portion when beads are arranged in a zigzag manner.

[FIG. 7A] FIG. 7A is a schematic cross-sectional view illustrating a state in which a narrow portion having a defect is remelted.

[FIG. 7B] FIG. 7B is a schematic cross-sectional view illustrating a state after the narrow portion in FIG. 7A is repaired.

[FIG. 8A] FIG. 8A is a schematic cross-sectional view illustrating a state in which a defect in a narrow portion is mechanically removed.

[FIG. 8B] FIG. 8B is a schematic cross-sectional view illustrating a state after the narrow portion in FIG. 8A is repaired.

DESCRIPTION OF EMBODIMENTS

Hereinafter, configuration examples of the present invention will be described in detail with reference to the drawings. Here, an example applied to a welding device for manufacturing a three-dimensional additively manufactured object by depositing beads obtained by melting and solidifying a filler metal is described, the present invention is not limited thereto, and the present invention can also be applied to general welding such as fillet welding and butt welding.

<Welding System>

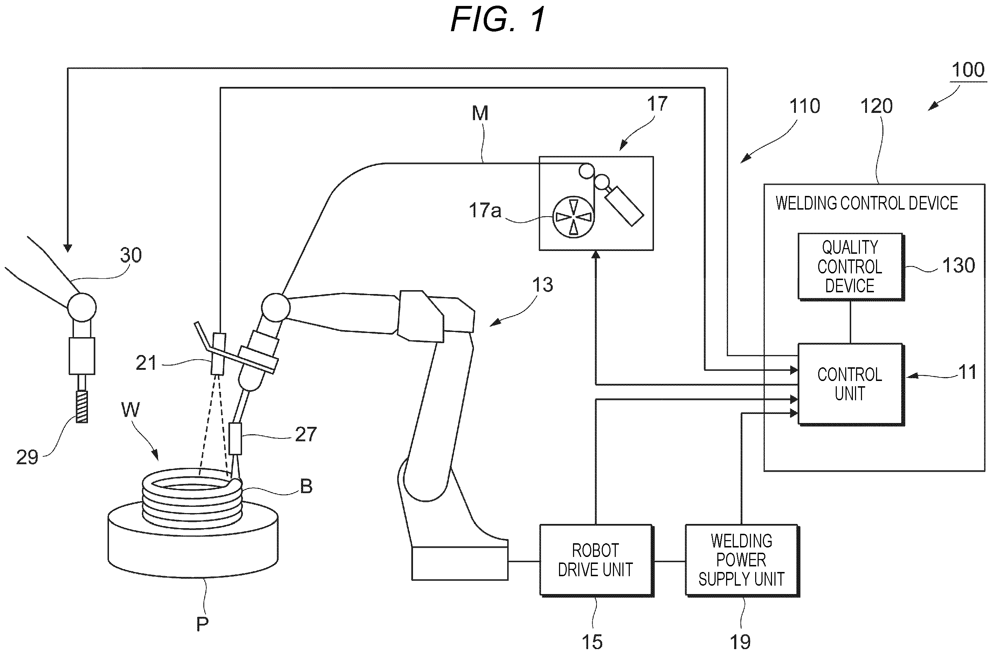

FIG. 1 is an overall configuration diagram of a welding system.

A welding system 100 includes a welding device 110 and a welding control device 120. The welding control device 120 includes a control unit 11 and a quality control device 130.

(Welding Device)

First, a configuration of the welding device 110 will be described.

The welding device 110 includes a welding robot 13, a robot drive unit 15, a filler metal supply unit 17, a welding power supply unit 19, and a shape detection unit 21. The welding robot 13, the robot drive unit 15, the filler metal supply unit 17, the welding power supply unit 19, and the shape detection unit 21 are connected to the control unit 11. In addition, a machining unit 30 to which a tool 29 such as a drill or a milling tool to be described later in detail can be attached is connected to the control unit 11, and desired machine work such as cutting can be performed according to a command from the control unit 11. The machining unit 30 and the welding device 110 also function as a defect repairing unit to be described later.

The welding robot 13 is an articulated robot, and a welding torch 27 is attached to a tip end shaft thereof. The robot drive unit 15 outputs a command to drive the welding robot 13, and freely sets a position and a posture of the welding torch 27 three-dimensionally within a range of degrees of freedom of a robot arm. In addition, a continuously supplied filler metal (welding wire) M is supported at a tip end of the welding torch 27.

The welding torch 27 is a gas metal arc welding torch that has a shield nozzle (not illustrated) and is supplied with shield gas from the shield nozzle. An arc welding method may be a consumable electrode type such as shielded arc welding or carbon dioxide gas arc welding, or a non-consumable electrode type such as TIG welding or plasma arc welding, and is appropriately selected according to an additively manufactured object (welding structure) to be manufactured. For example, in the case of the consumable electrode type, a contact tip is disposed inside the shield nozzle, and a filler metal M to which a melting current is supplied is held by the contact tip. The welding torch 27 generates an arc from a tip end of the filler metal M in a shield gas atmosphere while holding the filler metal M.

The filler metal supply unit 17 includes a reel 17a around which the filler metal M is wound. The filler metal M is fed from the filler metal supply unit 17 to a feeding mechanism (not illustrated) attached to the robot arm or the like, and is fed to the welding torch 27 while being fed forward and backward by the feeding mechanism as necessary.

Any commercially available welding wire can be used as the filler metal M. For example, a welding wire specified by solid wires for MAG and MIG welding of mild steel, high tensile strength steel, and low temperature service steel (JIS Z 3312), flux-cored wires for arc welding of mild steel, high tensile strength steel, and low temperature service steel (JIS Z 3313), and the like can be used. Further, it is also possible to use the filler metal M such as aluminum, an aluminum alloy, nickel, or a nickel-based alloy according to required properties.

The welding power supply unit 19 supplies, to the welding torch 27, a welding current and a welding voltage for generating an arc from the torch tip end.

The shape detection unit 21 is provided on or in the vicinity of the tip end shaft of the welding robot 13 and sets the vicinity of the tip end of the welding torch 27 as a measurement region. The shape detection unit 21 may be another detection unit provided at a position different from that of the welding torch 27.

The shape detection unit 21 of this configuration is moved together with the welding torch 27 by the driving of the welding robot 13 and measures shapes of beads B and a portion serving as a base when the beads B are formed. As the shape detection unit 21, for example, a laser sensor that acquires reflected light of irradiated laser light as height information can be used. In addition, other detection units such as a camera for three-dimensional shape measurement may be used as the shape detection unit 21.

In the welding device 110 having the above-described configuration, a manufacturing program corresponding to the additively manufactured object to be manufactured is transmitted from the control unit 11 to the robot drive unit 15. The manufacturing program includes a large number of command codes and is created based on an appropriate algorithm according to various conditions such as shape data (CAD data or the like), a material, and a heat input amount of the additively manufactured object.

The robot drive unit 15 executes the received manufacturing program, drives the welding robot 13, the filler metal supply unit 17, the welding power supply unit 19, and the like, and forms the beads B along a trajectory set in the manufacturing program. That is, the robot drive unit 15 drives the welding robot 13 to move the welding torch 27 along a trajectory (bead formation trajectory) of the welding torch 27, which is set in the manufacturing program. At the same time, the filler metal supply unit 17 and the welding power supply unit 19 are driven according to set welding conditions, and the filler metal M at the tip end of the welding torch 27 is melted and solidified by the arc. Accordingly, the beads B are formed on a base plate P along the trajectory of the welding torch 27. A bead layer including a plurality of beads B is formed, and a next bead layer is deposited on the bead layer, whereby an additively manufactured object W having a desired three-dimensional shape is built.

The welding control device 120 is not illustrated and is implemented by a computer device including a processor such as a CPU, a memory such as a ROM and a RAM, and a storage unit such as a hard disk drive (HD) and a solid state drive (SSD). Each component of the welding control device 120 described above operates according to commands from the CPU and performs respective functions. In addition, the welding control device 120 may be disposed away from the welding device 110 and may be connected to the welding device 110 from a remote place via a communication unit such as a network.

The control unit 11 constituting the welding control device 120 collectively controls the robot drive unit 15, the filler metal supply unit 17, the welding power supply unit 19, and the shape detection unit 21 illustrated in FIG. 1. The control unit 11 executes a drive program prepared in advance or a drive program created under desired conditions to drive each unit such as the welding robot 13. In this manner, the welding torch 27 is moved according to the drive program, and a plurality of layers of beads B are deposited on the base plate P based on a created building plan, whereby an additively manufactured object W having a multilayer structure is built.

<Quality Control Device>

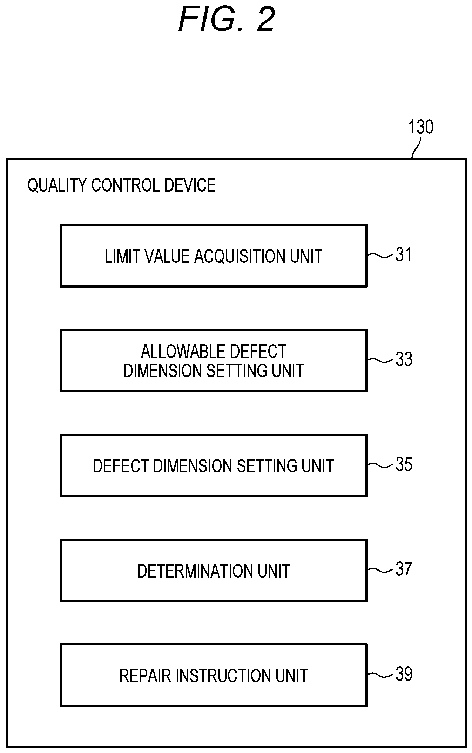

FIG. 2 is a schematic functional block diagram of the quality control device 130.

The quality control device 130 predicts the presence or absence of a defect generated in the additively manufactured object and a defect dimension when the additively manufactured object is built by depositing a plurality of beads formed by melting and solidifying the filler metal M by the welding device 110 in a layered manner, and performs quality determination of the additively manufactured object. According to a size of the defect, the manufacturing program (that is, a predetermined building plan) for driving each unit of the welding device 110 based on the building plan is corrected as necessary. For example, when a bead is formed according to the predetermined building plan, it is possible to prevent bead heights from becoming uneven or to prevent a non-welded portion (defect) from occurring inside the bead by changing or adjusting the building plan. The quality control device 130 generates control information for updating such a building plan and outputs the control information to the control unit 11. The quality control device 130 includes a limit value acquisition unit 31, an allowable defect dimension setting unit 33, a defect dimension setting unit 35, and a determination unit 37 to be described later in detail. The quality control device 130 may include a repair instruction unit 39 to be described later in detail. The quality control device 130 implemented by a computer device performs the above-described functions by executing the program prepared in advance.

<Procedure of Quality Control Method>

Next, the operation of each unit of the quality control device 130 having the above-described configuration will be described.

The quality control device 130 controls quality of the additively manufactured object (or beads) formed by repeatedly depositing the beads B formed by melting and solidifying the filler metal M in a layered manner based on the predetermined building plan.

The procedure of the quality control method schematically includes the following steps (1) to (4).

(1) The limit value acquisition unit 31 acquires a limit value of a stress intensity factor required for the additively manufactured object, such as a lower limit stress intensity factor range of the stress intensity factor or a fracture toughness value.

(2) The allowable defect dimension setting unit 33 obtains an allowable defect dimension of a defect present in the additively manufactured object by using a variation range of a load stress assumed in design of the additively manufactured object and a condition value including the limit value.

(3) The defect dimension setting unit 35 sets, as a defect dimension, any one of a predicted value of a defect dimension of a defect that is capable of being generated in the additively manufactured object when the additively manufactured object is manufactured based on the building plan and a measured value of a defect dimension of a defect generated in a test specimen manufactured based on the building plan.

(4) The determination unit 37 compares the defect dimension with the allowable defect dimension to determine quality of the beads or the additively manufactured object.

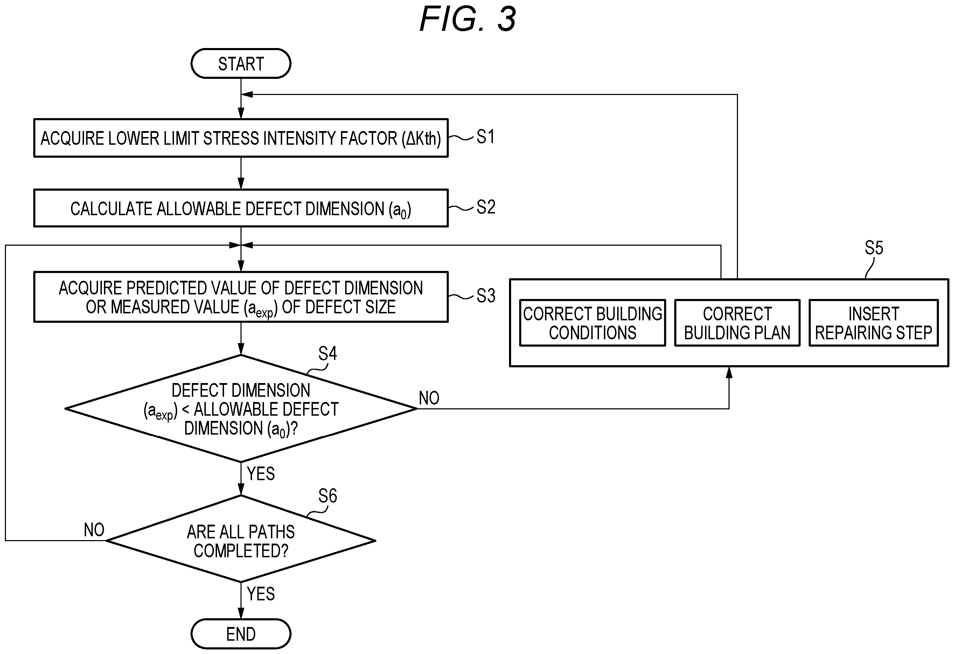

Each of the above-described steps will be described with reference to FIG. 3.

FIG. 3 is a flowchart illustrating a procedure of a quality control method.

First, a lower limit stress intensity factor range, which is a limit value of a stress intensity factor of the additively manufactured object to be manufactured, is acquired (step S1: hereinafter referred to as S1). A material of the additively manufactured object is selected at a product design stage, and a stress intensity factor K of the material may be experimentally obtained by, for example, a fatigue test or the like of a test specimen, may be obtained by stress analysis or the like of crack growth, or may be obtained by machine learning or the like.

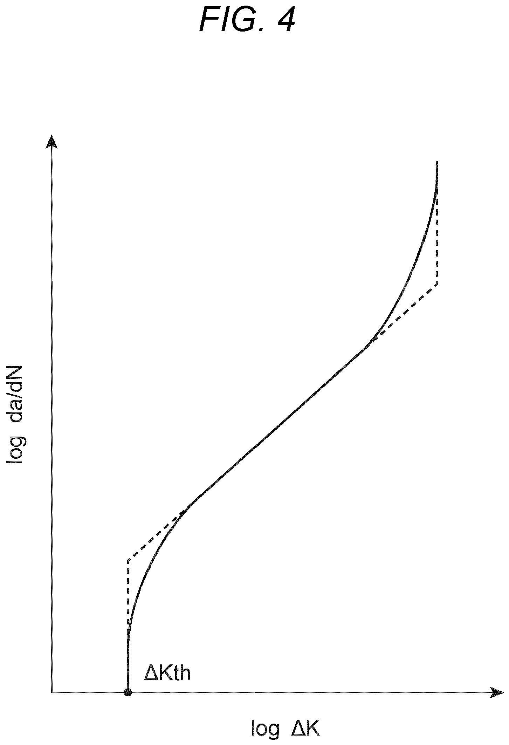

FIG. 4 is a graph schematically illustrating a relation between a crack growth rate (da/dn) and a stress intensity factor range $\Delta K$.

As illustrated in FIG. 4, in general, when the stress intensity factor range $\Delta K$ is decreased, the crack growth rate (da/dn) rapidly decreases, and no crack growth is observed when the stress intensity factor range $\Delta K$ is $\Delta K_{th}$. $\Delta K_{th}$ is called a lower limit stress intensity factor range. In a region smaller than the lower limit stress intensity factor range $\Delta K_{th}$, the crack does not grow even when a load is applied.

As the lower limit stress intensity factor range $\Delta K_{th}$, a value obtained by subjecting a test specimen obtained from the additively manufactured object to a fatigue crack growth test may be used, or a value predicted based on a past building result or the like may be used. The test specimen may be prepared by manufacturing a block test specimen through aligning various conditions such as an additively manufactured object to be manufactured, a material of the filler metal M, and welding conditions, and cutting out a portion having a defect from the manufactured block test specimen.

Next, an allowable defect dimension of a defect present in the additively manufactured object is obtained (S2). The allowable defect dimension is obtained by using a stress variation range $\Delta\sigma$ of a load stress assumed in design of the additively manufactured object and a condition value including the lower limit stress intensity factor range $\Delta K_{th}$.

A relation between the stress intensity factor K and a defect (crack) dimension a can be expressed according to Equation (1).

[Formula 1]

$$K = F\sigma\sqrt{\pi a} \qquad (1)$$

Here, F is a dimensionless constant depending on a crack dimension ratio and a load type.

According to Equation (1), it can be said that the lower limit stress intensity factor range $\Delta K_{th}$ and the stress variation range $\Delta\sigma$ of the load stress have a corresponding relation as given by Equation (2). Therefore, an allowable defect (crack) dimension $a_0$ is calculated according to Equation (2).

[Formula 2]

$$\Delta K_{th} = F\Delta\sigma\sqrt{\pi a_0} \qquad (2)$$

When there are a plurality of types of stress acting on the additively manufactured object, a plurality of forms of fracture, and a plurality of assumed defect shapes, the allowable defect dimension $a_0$ may be calculated for each type. For example, the allowable defect dimension $a_0$ may be calculated according to a fracture strength when a maximum value $K_{max}$ of the stress intensity factor reaches a fracture toughness value $K_{IC}$ of the material. In this case, $K_{max}$ takes a form of Equation (3). $\sigma_{max}$ is a maximum value of the load stress. In the case of Equation (3), the allowable defect dimension $a_0$ can be determined by calculation without actual measurement on a condition that the fracture toughness value $K_{IC}$ of the material is known, and thus the quality control can be performed more easily.

[Formula 3]

$$K_{max} = F\sigma_{max}\sqrt{\pi a_0} \qquad (3)$$

The defect referred to herein may include, in addition to a void formed inside the additively manufactured object, a crack or a depression formed on a surface of the additively manufactured object. Further, an oxide, an inclusion, or the like derived from components of a building material may be contained in the void or the crack. $K_{IC}$ is a value acquired in accordance with a standardized test evaluation method, and for example, a value conforming to ASTM standard E399 is used for comparison.

Next, the predicted value of the defect dimension of the defect generated during building or the measured value of the defect dimension is acquired (S3).

First, for example, a method using machine learning can be used as a method for predicting a defect dimension of a defect generated during building. Specifically, a relation between welding conditions (a travel speed, a feeding speed of a filler metal, a bead interval, a target position, and the like) used in the additive manufacturing and a defect dimension of a defect generated in a sample manufactured under the welding conditions is learned, and an estimation model representing the relation between the welding conditions and the defect dimension is generated based on the learning

By obtaining the defect dimension corresponding to the welding conditions to be actually used using the trained estimation model, it is possible to predict the defect dimension considered to be generated before actual building. In the training of the estimation model, a measured value obtained by actually manufacturing a test specimen for each welding condition and observing a defect may be used, or an analysis value obtained by calculation using an analysis method such as FEM may be used.

The estimation model may be a model obtained by learning a relation between a bead shape of beads constituting the additively manufactured object observed during building and a defect dimension of a defect to be generated, instead of or in addition to the welding conditions. In this case, a defect dimension can be predicted in consideration of an influence of a narrow portion or the like formed by beads. The bead shape referred to here may be a shape predicted based on the trajectory of the welding torch 27 determined in the building plan, or may be a measured bead shape obtained by performing scanning with the laser sensor of the shape detection unit 21.

A well-known method can be used as a method of obtaining an estimation model by the above-described learning Examples of the method include a decision tree, linear regression, random forest, support vector machine, Gaussian process regression, and neural network. The defect dimension may be predicted by collectively obtaining all paths on which an additively manufactured object is formed, and more precise consideration is possible if the prediction is performed for each path.

Next, as a method for acquiring a measured value of a defect dimension, a well-known detection means, for example, a non-destructive inspection method such as ultrasonic testing, CT, or inspection can be used. Accordingly, it is possible to detect the defect dimension of the defect formed in the test specimen (for example, inside the deposited beads or between the beads) manufactured based on the building plan.

As described above, the predicted value or the measured value of the defect is obtained and set as a defect dimension $a_{exp}$. If the predicted value is set as the defect dimension $a_{exp}$, the building plan to be described later can be updated more easily by calculation. In addition, if the measured value is set as the defect dimension $a_{exp}$, an accurate defect evaluation according to a state of a bead formed actually can be performed, and the building plan can be updated more appropriately. When both the predicted value and the measured value are obtained, either one may be adopted depending on a purpose of quality control, or the values may be averaged.

Next, the set defect dimension $a_{exp}$ is compared with the allowable defect dimension $a_0$ to determine the quality of the beads or the additively manufactured object (S4).

In the quality determination, when the defect dimension $a_{exp}$ is smaller than the allowable defect dimension $a_0$ ($a_{exp} < a_0$), the quality of the formed beads or additively manufactured object is determined to be good, and when the defect dimension $a_{exp}$ is less than the allowable defect dimension $a_0$, the quality is determined to be bad.

When the defect dimension $a_{exp}$ is larger than the allowable defect dimension $a_0$, the allowable defect dimension $a_0$ is increased, or the building conditions are corrected or the building plan is corrected in order to decrease the defect dimension $a_{exp}$. Further, a repair plan to be described later in detail may be inserted (S5).

For example, in order to increase the allowable defect dimension $a_0$, a bead line direction (bead formation trajectory) of the building plan may be changed so that an intersection angle between a direction in which a bead is formed and a principal stress direction in which a load is assumed to be applied to the additively manufactured object becomes small. When the material can be changed, the material may be changed to a material having high toughness to correct the building plan. Here, the principal stress direction of the load acting on the additively manufactured object can be obtained by calculation by using a method such as stress analysis based on load conditions in which a principal load or the like is assumed in a design stage of the additively manufactured object.

In order to decrease the defect dimension $a_{exp}$, a welding current and a welding voltage may be adjusted so as to increase a heat input amount of the bead, or various conditions such as the travel speed may be changed. Further, the trajectory of the welding torch in the building plan may be changed.

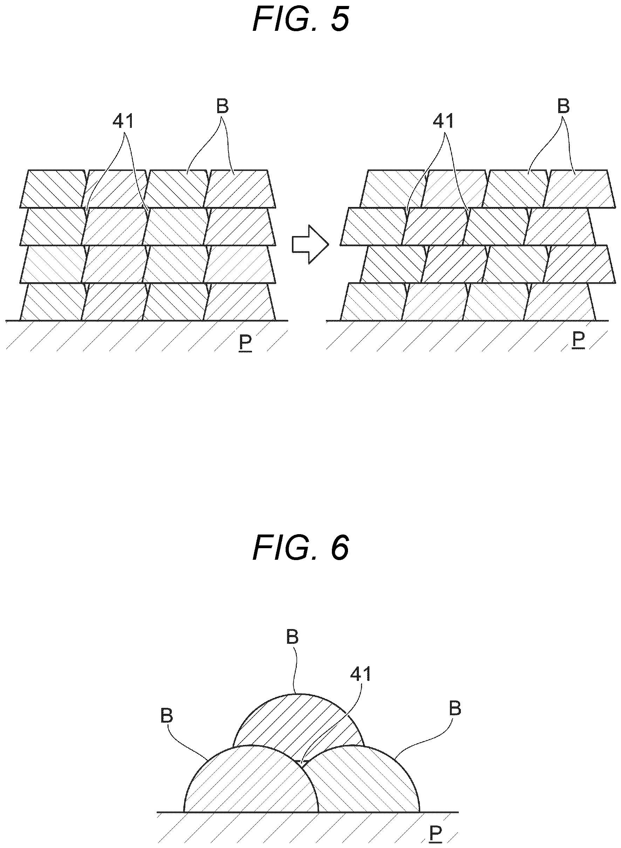

FIG. 5 is a diagram illustrating a state in which the beads of the additively manufactured object are deposed in a cross-sectional shape.

When the beads B in an upper layer is formed immediately above the beads B in a lower layer at the time of depositing the beads B, a defect such as a void or a foreign matter is likely to be generated due to narrow portions (valley portions) 41 each formed between the adjacent beads B. The narrow portions 41 are disposed at the same position in an arrangement direction of the beads B in a bead layer, and thus the defects may be connected in a depositing direction. Therefore, it is preferred to reduce a height of the defect extending in the depositing direction by arranging the beads B in a zigzag manner with respect to the depositing direction.

FIG. 6 is a cross-sectional view schematically illustrating one narrow portion 41 when beads are arranged in a zigzag manner.

When the beads B are arranged in a zigzag manner with respect to the depositing direction, a new bead B is formed immediately above the narrow portion 41 between the beads B in a lower layer. Therefore, the remelting occurs in the narrow portion 41 due to the formation of the new bead B, a cavity disappears, and the foreign matter is removed. Accordingly, the defects are less likely to be generated in the additively manufactured object.

In step S5, when the welding conditions are corrected, the process returns to step S3 of predicting or measuring the defect dimension corresponding to the corrected welding conditions. In addition, in step S5, when the building plan is corrected, the process returns to step S1 of acquiring a lower limit stress intensity factor range $\Delta K_{th}$ corresponding to the corrected building plan.

The procedure of steps S1 to S4 and S5 described above is repeated for all the paths (S6), and the quality determination of the defect dimension for all the paths is completed.

Not only a magnitude relation between the defect dimension $a_{exp}$ and the allowable defect dimension $a_0$, but also information on a difference between both dimensions may be used for the quality determination. For example, when the defect dimension $a_{exp}$ is sufficiently larger than the allowable defect dimension $a_0$, for example, when the defect dimension $a_{exp}$ is equal to or larger than a specific threshold value such as 5% or more, 10% or more, or 30% or more of the allowable defect dimension $a_0$, the building plan capable of increasing a correction width may be corrected, and when the defect dimension $a_{exp}$ exceeds a range less than the specific threshold value, only the welding conditions may be corrected. In this case, it is possible to perform appropriate adjustment according to a degree of correction, and to efficiently reduce the defect dimension.

As described above, according to the quality control method, the defect dimension is set based on any one of the predicted value of the defect obtained based on the building plan and the measured value of the defect of the test specimen manufactured based on the building plan, and the allowable defect dimension is obtained based on the variation range of the load stress of the additively manufactured object and the condition value including the lower limit stress intensity factor range or the limit value of the stress intensity factor such as the fracture toughness value. The obtained allowable defect dimension is compared with the above-described defect dimension to determine the quality of the additively manufactured object in the case of building according to the building plan. Therefore, the quality of the additively manufactured object can be predicted from a stage of the building plan before building. In addition, the allowable defect dimension is obtained based on properties of the limit value of the stress intensity factor, and thus the allowable defect dimension serving as a determination criterion can be appropriately set according to material properties, and an accuracy of the quality determination can be improved.

The allowable defect dimension may be obtained for each shape type of the defect. In this case, it is possible to deal with various types of defects, such as blowhole defects and elongated defects along the bead line direction.

By measuring a shape of a bead formed actually and setting a defect dimension in consideration of a measurement result thereof, more accurate prediction is possible and the accuracy of the quality determination can be improved.

Further, the lower limit stress intensity factor range or the fracture toughness value to be set may be determined according to a surface roughness of the formed bead. In this case, it is also possible to specify the allowable defect dimension in consideration of a case in which a surface that cannot be completely cut remains after the building. Here, the surface roughness refers to a roughness defined according to JIS B 0601: 1994 or JIS B 0031: 1994.

By using the estimation model obtained by machine learning for a defect dimension prediction processing, it is possible to extract predicted values of defect dimensions corresponding to various building cases as long as training data is prepared.

When the allowable defect dimension is compared with the defect dimension and the defect dimension is larger, the bead formation of the additively manufactured object may be temporarily stopped. Accordingly, it is possible to prevent unnecessary building and to prevent the repair of defects from becoming complicated. The step of correcting the manufacturing conditions of the additively manufactured object may be executed before the additively manufactured object is manufactured or during an inter-pass time of the beads formed during the manufacturing of the additively manufactured object. In this case, the correction of the manufacturing conditions can be completed before the start of building or before a next bead is deposited, and the bead can be formed under the corrected manufacturing conditions. Therefore, it is possible to reduce the predicted defect dimension or to prevent the occurrence of defects.

If a criterion for determining whether a defect is harmful or harmless is specified before building, an influence of the defect is easily determined during building in cooperation with shape detection information from the shape detection unit 21. In addition, if the criterion is specified, the improvement of a degree of freedom in design of the building plan can be expected without considering the quality excessively.

The above-described comparison between the defect dimension $a_{exp}$ and the allowable defect dimension $a_0$ may be performed every time the bead formation along the path set in the building plan is completed, or may be performed in the middle of the path and continuously processed in real time. In this case, it is possible to contribute to the reduction of a takt time, to obtain the quality determination result of the generated defect at an early stage, and to start the handling of the defect determined to be bad at an early stage.

<Repairing of Additively Manufactured Object>

The procedure of the above-described quality control method is performed for predicting whether a defect having a dimension that causes a problem in strength occurs in the additively manufactured object to be manufactured based on the building plan before building and notifying an operator of a prediction result thereof or temporarily stopping the building, and when it is predicted that there is a defect causing a problem, it is more preferred to repair the defect.

In order to repair the defect, the repair instruction unit 39 illustrated in FIG. 2 outputs repair instruction signals to the control unit 11 illustrated in FIG. 1 to execute the repair. The control unit 11 drives the welding robot 13, the machining unit 30, and the like according to the input repair instruction signals, and executes a repair operation on the additively manufactured object W during building. Examples of the repair operation include a method of remelting a defect by heating and a method of mechanically removing a defect and then filling the removed portion with molten metal.

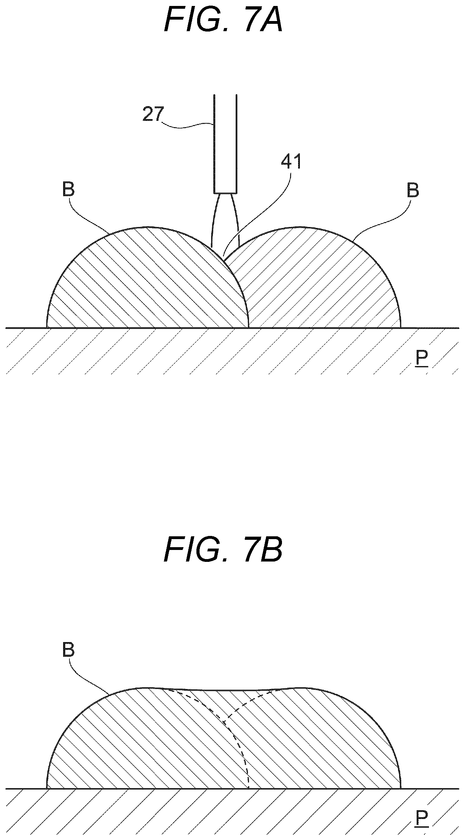

FIG. 7A is a schematic cross-sectional view illustrating a state in which the narrow portion 41 having a defect is remelted. FIG. 7B is a schematic cross-sectional view illustrating a state after the narrow portion 41 in FIG. 7A is repaired.

As illustrated in FIG. 7A, when there is a defect in the narrow portion 41 between the adjacent beads B and the defect is determined to be larger than the allowable defect dimension by using the quality control method, a repair operation for repairing the defect is executed.

In order to remove the defect, first, a position at which the defect dimension is larger than the allowable defect dimension is specified as a defect position, and the bead at the defect position is remelted by the heat source which supplies thermal energy. Specifically, the repair instruction unit 39 outputs repair instruction signals to the control unit 11. The control unit 11 drives units of the welding device 110 according to the input repair instruction signals. According to the command from the control unit 11, the welding device 110 functions as the defect repairing unit, the welding torch 27 is disposed at the defect position, and generates an arc from the torch tip end. In the TIG welding, an arc is generated from a TIG electrode. Accordingly, the narrow portion 41 is remelted by heat input from the arc, and a void present in the narrow portion 41 is filled with molten metal. In addition, a foreign matter present in the void is discharged from the narrow portion 41 by the molten metal. As a result, as illustrated in FIG. 7B, a defect is removed between the adjacent beads B, and a smooth bead connection surface is formed on surfaces of the adjacent beads B. Thus, the generated defect is removed by only melting the beads again. In addition, after the removal of the defect, the depositing is continued as it is, and the repair operation is not complicated.

When the narrow portion 41 is deep, the filler metal M may be fed to supply molten metal as necessary. When the filler metal M is fed, it is preferable to first apply an arc to the narrow portion 41 using only the TIG electrode and then add the filler metal M, which prevents the arc from being blocked by the filler metal M and results in a good molten pool. In addition, the gouging may be performed by feeding compressed air together with the arc, whereby a defective portion can be removed by being gouged out. Further, the defective portion may be removed by performing gouging using a plasma arc.

The defect can also be mechanically removed.

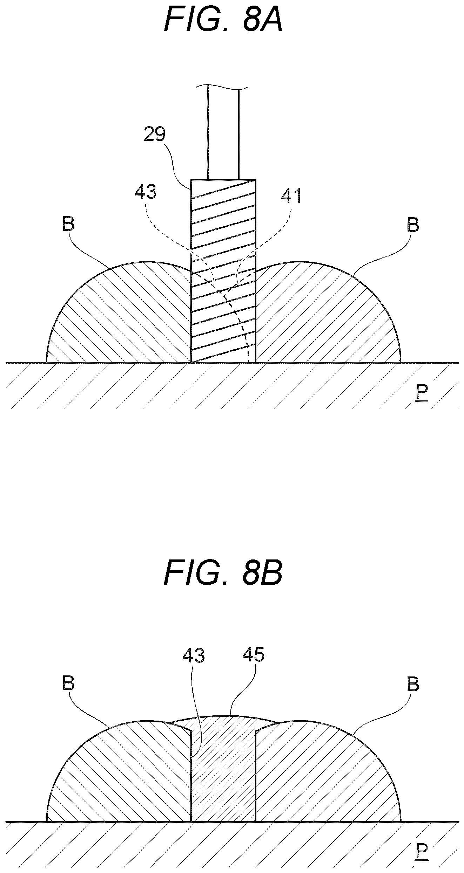

FIG. 8A is a schematic cross-sectional view illustrating a state in which a defect in the narrow portion 41 is mechanically removed. FIG. 8B is a schematic cross-sectional view illustrating a state after the narrow portion in FIG. 8A is repaired.

First, the defect position is specified as in the case illustrated in FIG. 7A, and the repair instruction unit 39 outputs repair instruction signals to the control unit 11. The control unit 11 drives the machining unit 30 and the welding device 110 according to the input repair instruction signals. According to a command from the control unit 11, the machining unit 30 and the welding device 110 function as the defect repairing unit to remove a defect at the defect position. Specifically, the machining unit 30 is driven according to a repair command from the control unit 11 to dispose the tool 29 in the narrow portion 41. Then, the narrow portion 41 is cut by the tool 29 to form a cavity portion 43. Next, the machining unit 30 retreats from the narrow portion 41, and the welding torch 27 moves to a position of the cavity portion 43. Then, an arc is generated from the torch tip end, and the cavity portion 43 is filled with molten metal 45 obtained by melting the filler metal M. Accordingly, the bead layer from which the defect is removed is formed as in FIG. 7B.

As described above, after the generated defect is mechanically removed, the cavity portion 43 is filled with the molten metal 45, whereby the additively manufactured object having no defect or foreign matter can be easily built. In this case, the repair operation does not become complicated regardless of a complicated shape or a thick structure. Furthermore, a repair location is limited to a small range, and thus an influence on the periphery of the defect position is small. In addition, when the drill is used as the tool 29, the bead can be cut deeply, and thus when the defect position becomes deep as the depositing progresses for a while after the occurrence of the defect, the defect can also be repaired easily. It is sufficient to perform repair, that is, remove a part of the bead including a portion at which the defect dimension becomes large by cutting depending on the defect.

The arc welding for remelting and the arc welding for filling the cavity portion 43 may be welding using the welding robot 13 or may be manual welding. In addition, as the welding conditions, a pulse mode in which deep penetration is obtained in a short time is preferred, and other modes may be used depending on a thickness.

The repair instruction unit 39 may output a repair instruction signal for executing the repair before the additively manufactured object is manufactured or during the inter-pass time of the beads during the manufacturing of the additively manufactured object. Accordingly, the defect can be repaired while the bead formation is stopped. Therefore, the correction of the manufacturing conditions can be completed before the start of building or before a next bead is deposited, and the predicted defect dimension can be reduced or the occurrence of defects can be prevented.

As described above, the present invention is not limited to the above-described embodiments, and combinations of the respective configurations of the embodiments and changes and applications made by those skilled in the art based on the description of the specification and well-known techniques are also intended for the present invention and are included in the scope of protection.

As described above, the present specification discloses the following matters.

(1) A quality control method for an additively manufactured object obtained by repeatedly depositing beads formed by melting and solidifying a filler metal in a layered manner based on a predetermined building plan, the quality control method including:

acquiring a limit value of a stress intensity factor of the additively manufactured object;
obtaining an allowable defect dimension of a defect present in the additively manufactured object by using a variation range of a load stress assumed in design of the additively manufactured object and a condition value including the limit value;
setting, as a defect dimension, any one of a predicted value of a defect dimension of a defect that is capable of being generated in the additively manufactured object when the additively manufactured object is manufactured based on the building plan and a measured value of a defect dimension of a defect generated in a test specimen manufactured based on the building plan; and
comparing the defect dimension with the allowable defect dimension to determine quality of the beads or the additively manufactured object.

According to the quality control method for an additively manufactured object, the defect dimension is set based on any one of the predicted value of the defect obtained based on the building plan and the measured value of the defect of the test specimen manufactured based on the building plan, and the allowable defect dimension is obtained based on the variation range of the load stress of the additively manufactured object and the condition value including the limit value of the stress intensity factor. The obtained allowable defect dimension is compared with the above-described defect dimension to determine the quality of the additively manufactured object in the case of building according to the building plan. Therefore, the quality of the additively manufactured object can be predicted from the stage of the building plan before building. In addition, the allowable defect dimension is obtained based on properties of the limit value of the stress intensity factor, and thus the allowable defect dimension serving as a determination criterion can be appropriately set according to material properties, and an accuracy of the quality determination can be improved.

(2) The quality control method for an additively manufactured object according to (1), in which the limit value is any one of a lower limit stress intensity factor and a fracture toughness value of the additively manufactured object.

According to the quality control method for an additively manufactured object, the allowable defect dimension can be determined based on the lower limit stress intensity factor or the fracture toughness value.

(3) The quality control method for an additively manufactured object according to (1) or (2), further including: setting the allowable defect dimension for each shape type of the defect.

According to the quality control method for an additively manufactured object, quality control corresponding to various types of defects such as blowhole defects and elongated defects along a bead line direction can be performed.

(4) The quality control method for an additively manufactured object according to (1) or (2), further including: setting the allowable defect dimension according to a fracture strength when a maximum value of the stress intensity factor of the additively manufactured object reaches the fracture toughness value.

According to the quality control method for an additively manufactured object, the fracture toughness value of the material is known, whereby the allowable defect dimension can be determined by calculation without actual measurement, and thus the quality control can be performed more easily.

(5) The quality control method for an additively manufactured object according to any one of (1) to (4), further including: setting the predicted value based on the building plan and a result of measuring a shape of the bead.

According to the quality control method for an additively manufactured object, more precise prediction is possible by predicting the defect dimension in consideration of the bead shape.

(6) The quality control method for an additively manufactured object according to any one of (1) to (5), further including: determining the limit value according to a surface roughness of the bead.

According to the quality control method for an additively manufactured object, it is also possible to specify the allowable defect dimension in consideration of a case in which a surface that cannot be completely cut remains after the building.

(7) The quality control method for an additively manufactured object according to any one of (1) to (6), further including: predicting the predicted value using an estimation model obtained by machine-learning a relation between at least one of manufacturing conditions of the additively manufactured object and the shape of the bead and the defect dimension.

According to the quality control method for an additively manufactured object, it is possible to extract predicted values of defect dimensions corresponding to various building cases as long as training data is prepared.

(8) The quality control method for an additively manufactured object according to any one of (1) to (7), further including: comparing the defect dimension with the allowable defect dimension, and correcting manufacturing conditions of the additively manufactured object when the defect dimension is larger than the allowable defect dimension.

According to the quality control method for an additively manufactured object, the correction of the manufacturing conditions can be completed before the start of building or before a next bead is deposited, and the bead can be formed under the corrected manufacturing conditions. Therefore, it is possible to reduce the predicted defect dimension or to prevent the occurrence of defects.

(9) The quality control method for an additively manufactured object according to (8), further including:

> specifying a position at which the defect dimension is larger than the allowable defect dimension as a defect position; and
>
> remelting the bead at the defect position by a heat source configured to supply thermal energy.

According to the quality control method for an additively manufactured object, the defect can be eliminated by remelting.

(10) The quality control method for an additively manufactured object according to (8), further including:

> specifying a position at which the defect dimension is larger than the allowable defect dimension as a defect position; and
>
> removing a part of the bead including the defect position by cutting.

According to the quality control method for an additively manufactured object, the defect is mechanically removed by cutting, and thus an additively manufactured object having no foreign matter or defect can be easily built.

(11) A program for causing a computer to execute procedures of a quality control method for an additively manufactured object obtained by repeatedly depositing beads formed by melting and solidifying a filler metal in a layered manner based on a predetermined building plan, the program for causing the computer to execute:

> a procedure of acquiring a limit value of a stress intensity factor of the additively manufactured object;
>
> a procedure of obtaining an allowable defect dimension of a defect present in the additively manufactured object by using a variation range of a load stress assumed in design of the additively manufactured object and a condition value including the limit value;
>
> a procedure of setting, as a defect dimension, any one of a predicted value of a defect dimension of a defect that is capable of being generated in the additively manufactured object when the additively manufactured object is manufactured based on the building plan and a measured value of a defect dimension of a defect generated in a test specimen manufactured based on the building plan; and
>
> a procedure of comparing the defect dimension with the allowable defect dimension to determine quality of the beads or the additively manufactured object.

According to the program, the defect dimension is set based on any one of the predicted value of the defect obtained based on the building plan and the measured value of the defect of the test specimen manufactured based on the building plan, and the allowable defect dimension is obtained based on the variation range of the load stress of the additively manufactured object and the condition value including the limit value of the stress intensity factor. The obtained allowable defect dimension is compared with the above-described defect dimension to determine the quality of the additively manufactured object in the case of building according to the building plan. Therefore, the quality of the additively manufactured object can be predicted from the stage of the building plan before building. In addition, the allowable defect dimension is obtained based on properties of the limit value of the stress intensity factor, and thus the allowable defect dimension serving as a determination criterion can be appropriately set according to material properties, and an accuracy of the quality determination can be improved.

(12) A quality control device for an additively manufactured object obtained by repeatedly depositing beads formed by melting and solidifying a filler metal in a layered manner based on a predetermined building plan, the quality control device including:

a limit value acquisition unit configured to acquire a limit value of a stress intensity factor of the additively manufactured object;
an allowable defect dimension setting unit configured to obtain an allowable defect dimension of a defect present in the additively manufactured object by using a variation range of a load stress assumed in design of the additively manufactured object and a condition value including the limit value;
a defect dimension setting unit configured to set, as a defect dimension, any one of a predicted value of a defect dimension of a defect that is capable of being generated in the additively manufactured object when the additively manufactured object is manufactured based on the building plan and a measured value of a defect dimension of a defect generated in a test specimen manufactured based on the building plan; and
a determination unit configured to compare the defect dimension with the allowable defect dimension to determine quality of the beads or the additively manufactured object.

According to the quality control device for an additively manufactured object, the defect dimension is set based on any one of the predicted value of the defect obtained based on the building plan and the measured value of the defect of the test specimen manufactured based on the building plan, and the allowable defect dimension is obtained based on the variation range of the load stress of the additively manufactured object and the condition value including the limit value of the stress intensity factor. The obtained allowable defect dimension is compared with the above-described defect dimension to determine the quality of the additively manufactured object in the case of building according to the building plan. Therefore, the quality of the additively manufactured object can be predicted from the stage of the building plan before building. In addition, the allowable defect dimension is obtained based on properties of the limit value of the stress intensity factor, and thus the allowable defect dimension serving as a determination criterion can be appropriately set according to material properties, and an accuracy of the quality determination can be improved.

(13) A welding control device including:

the quality control device for an additively manufactured object according to (12); and
a control unit configured to control continuation or stop of arc welding according to a result of the quality determination output from the quality control device.

According to the welding control device, unnecessary building can be prevented in advance by temporarily stopping arc welding when the occurrence of a defect is found.

(14) A welding device including:

the welding control device according to (13); and
a welding robot configured to perform arc welding.

According to the welding device, arc welding by which a defect is less likely to occur can be performed.

(15) The welding device according to (14), further including:

a defect repairing unit configured to repair the defect generated in the additively manufactured object; and

a repair instruction unit configured to compare the defect dimension with the allowable defect dimension, and output, to the defect repairing unit, a repair instruction signal for repairing a portion at which the defect dimension becomes large when the defect dimension is larger than the allowable defect dimension.

According to the welding device, when a defect having a dimension larger than the allowable defect dimension is generated, the repair instruction signal for repairing the defect is output to the defect repairing unit. Accordingly, the defect repairing unit can perform repair at an appropriate timing.

(16) The welding device according to (15), in which the repair instruction unit causes the defect repairing unit to repair the defect before the additively manufactured object is manufactured or during an inter-pass time of the beads during the manufacturing of the additively manufactured object.

According to the welding device, the defect can be repaired while the bead formation is stopped. Therefore, the correction of the manufacturing conditions can be completed before the start of building or before a next bead is deposited, and the predicted defect dimension can be reduced or the occurrence of defects can be prevented.

(17) The welding device according to (15) to (16), in which the defect repairing unit remelts the portion at which the defect dimension becomes large by a heat source.

According to the welding device, the defect can be more efficiently eliminated by remelting.

(18) The welding device according to (15) to (16), in which the defect repairing unit removes a part of a bead including the portion at which the defect dimension becomes large by cutting.

According to the welding device, a cavity portion is filled with molten metal after the defect is mechanically removed by cutting, and thus an additively manufactured object having no foreign matter or defect can be easily built.

The present application is based on Japanese Patent Application No. 2022-069534 filed on April 20, 2022, the contents of which are incorporated herein by reference.

REFERENCE SIGNS LIST

11: control unit
13: welding robot
15: robot drive unit
17: filler metal supply unit
17a: reel
19: welding power supply unit
21: shape detection unit
27: welding torch
29: tool
30: machining unit
31: limit value acquisition unit
33: allowable defect dimension setting unit
35: defect dimension setting unit
37: determination unit
39: repair instruction unit
41: narrow portion
43: cavity portion
45: molten metal
100: welding system
110: welding device
120: welding control device
130: quality control device
a: defect dimension
$a_0$: allowable defect dimension
$a_{exp}$: defect dimension
B: bead
K: stress intensity factor
M: filler metal
P: base plate
W: additively manufactured object
$\Delta K$: stress intensity factor range
$\Delta K_{th}$: lower limit stress intensity factor range (limit value)

**Claims**

1. A quality control method for an additively manufactured object obtained by repeatedly depositing beads formed by melting and solidifying a filler metal in a layered manner based on a predetermined building plan, the quality control method comprising:

   acquiring a limit value of a stress intensity factor of the additively manufactured object;
   obtaining an allowable defect dimension of a defect present in the additively manufactured object by using a variation range of a load stress assumed in design of the additively manufactured object and a condition value including the limit value;
   setting, as a defect dimension, any one of a predicted value of a defect dimension of a defect that is capable of being generated in the additively manufactured object when the additively manufactured object is manufactured based on the building plan and a measured value of a defect dimension of a defect generated in a test specimen manufactured based on the building plan; and
   comparing the defect dimension with the allowable defect dimension to determine quality of the beads or the additively manufactured object.

2. The quality control method for an additively manufactured object according to claim 1, wherein
   the limit value is any one of a lower limit stress intensity factor and a fracture toughness value of the additively manufactured object.

3. The quality control method for an additively manufactured object according to claim 1, further comprising:
   setting the allowable defect dimension for each shape type of the defect.

4. The quality control method for an additively manufactured object according to claim 2, further comprising:
   setting the allowable defect dimension for each shape type of the defect.

5. The quality control method for an additively manufactured object according to claim 1, further comprising:
   setting the allowable defect dimension according to a fracture strength when a maximum value of the stress intensity factor of the additively manufactured object reaches a fracture toughness value.

6. The quality control method for an additively manufactured object according to claim 2, further comprising:
   setting the allowable defect dimension according to a fracture strength when a maximum value of the stress intensity factor of the additively manufactured object reaches the fracture toughness value.

7. The quality control method for an additively manufactured object according to claim 1, further comprising:
   setting the predicted value based on the building plan and a result of measuring a shape of the bead.

8. The quality control method for an additively manufactured object according to claim 4, further comprising:
   setting the predicted value based on the building plan and a result of measuring a shape of the bead.

9. The quality control method for an additively manufactured object according to any one of claims 1 to 8, further comprising:
   determining the limit value according to a surface roughness of the bead.

10. The quality control method for an additively manufactured object according to any one of claims 1 to 8, further comprising:
    predicting the predicted value using an estimation model obtained by machine-learning a relation between at least one of manufacturing conditions of the additively manufactured object and the shape of the bead and the defect dimension.

11. The quality control method for an additively manufactured object according to claim 9, further comprising:
    predicting the predicted value using an estimation model obtained by machine-learning a relation between at least one of manufacturing conditions of the additively manufactured object and the shape of the bead and the defect dimension.

12. The quality control method for an additively manufactured object according to any one of claims 1 to 8, further comprising:

comparing the defect dimension with the allowable defect dimension, and correcting manufacturing conditions of the additively manufactured object when the defect dimension is larger than the allowable defect dimension.

13. The quality control method for an additively manufactured object according to claim 9, further comprising: comparing the defect dimension with the allowable defect dimension, and correcting manufacturing conditions of the additively manufactured object when the defect dimension is larger than the allowable defect dimension.

14. The quality control method for an additively manufactured object according to claim 12, further comprising:

   specifying a position at which the defect dimension is larger than the allowable defect dimension as a defect position; and
   remelting the bead at the defect position by a heat source configured to supply thermal energy.

15. The quality control method for an additively manufactured object according to claim 13, further comprising:

   specifying a position at which the defect dimension is larger than the allowable defect dimension as a defect position; and
   remelting the bead at the defect position by a heat source configured to supply thermal energy.

16. The quality control method for an additively manufactured object according to claim 12, further comprising:

   specifying a position at which the defect dimension is larger than the allowable defect dimension as a defect position; and
   removing a part of the bead including the defect position by cutting.

17. The quality control method for an additively manufactured object according to claim 13, further comprising:

   specifying a position at which the defect dimension is larger than the allowable defect dimension as a defect position; and
   removing a part of the bead including the defect position by cutting.

18. The quality control method for an additively manufactured object according to claim 14, further comprising:

   specifying a position at which the defect dimension is larger than the allowable defect dimension as a defect position; and
   removing a part of the bead including the defect position by cutting.

19. The quality control method for an additively manufactured object according to claim 15, further comprising:

   specifying a position at which the defect dimension is larger than the allowable defect dimension as a defect position; and
   removing a part of the bead including the defect position by cutting.

20. A program for causing a computer to execute procedures of a quality control method for an additively manufactured object obtained by repeatedly depositing beads formed by melting and solidifying a filler metal in a layered manner based on a predetermined building plan, the program for causing the computer to execute:

   a procedure of acquiring a limit value of a stress intensity factor of the additively manufactured object;
   a procedure of obtaining an allowable defect dimension of a defect present in the additively manufactured object by using a variation range of a load stress assumed in design of the additively manufactured object and a condition value including the limit value;
   a procedure of setting, as a defect dimension, any one of a predicted value of a defect dimension of a defect that is capable of being generated in the additively manufactured object when the additively manufactured object is manufactured based on the building plan and a measured value of a defect dimension of a defect generated in a test specimen manufactured based on the building plan; and
   a procedure of comparing the defect dimension with the allowable defect dimension to determine quality of the beads or the additively manufactured object.

21. A quality control device for an additively manufactured object obtained by repeatedly depositing beads formed by melting and solidifying a filler metal in a layered manner based on a predetermined building plan, the quality control device comprising:

a limit value acquisition unit configured to acquire a limit value of a stress intensity factor of the additively manufactured object;

an allowable defect dimension setting unit configured to obtain an allowable defect dimension of a defect present in the additively manufactured object by using a variation range of a load stress assumed in design of the additively manufactured object and a condition value including the limit value;

a defect dimension setting unit configured to set, as a defect dimension, any one of a predicted value of a defect dimension of a defect that is capable of being generated in the additively manufactured object when the additively manufactured object is manufactured based on the building plan and a measured value of a defect dimension of a defect generated in a test specimen manufactured based on the building plan; and

a determination unit configured to compare the defect dimension with the allowable defect dimension to determine quality of the beads or the additively manufactured object.

22. A welding control device comprising:

the quality control device for an additively manufactured object according to claim 21; and

a control unit configured to control continuation or stop of arc welding according to a result of the quality determination output from the quality control device.

23. A welding device comprising:

the welding control device according to claim 22; and

a welding robot configured to perform arc welding.

24. The welding device according to claim 23, further comprising:

a defect repairing unit configured to repair the defect generated in the additively manufactured object; and

a repair instruction unit configured to compare the defect dimension with the allowable defect dimension, and output, to the defect repairing unit, a repair instruction signal for repairing a portion at which the defect dimension becomes large when the defect dimension is larger than the allowable defect dimension.

25. The welding device according to claim 24, wherein

the repair instruction unit causes the defect repairing unit to repair the defect before the additively manufactured object is manufactured or during an inter-pass time of the beads during the manufacturing of the additively manufactured object.

26. The welding device according to claim 24 or 25, wherein

the defect repairing unit remelts the portion at which the defect dimension becomes large by a heat source.

27. The welding device according to claim 24 or 25, wherein

the defect repairing unit removes a part of a bead including the portion at which the defect dimension becomes large by cutting.

FIG. 1

# FIG. 2

130

QUALITY CONTROL DEVICE

| LIMIT VALUE ACQUISITION UNIT | ~31 |

| ALLOWABLE DEFECT DIMENSION SETTING UNIT | ~33 |

| DEFECT DIMENSION SETTING UNIT | ~35 |

| DETERMINATION UNIT | ~37 |

| REPAIR INSTRUCTION UNIT | ~39 |

## FIG. 3

START

ACQUIRE LOWER LIMIT STRESS INTENSITY FACTOR ($\Delta$Kth) — S1

CALCULATE ALLOWABLE DEFECT DIMENSION ($a_0$) — S2

ACQUIRE PREDICTED VALUE OF DEFECT DIMENSION OR MEASURED VALUE ($a_{exp}$) OF DEFECT SIZE — S3

S4
DEFECT DIMENSION ($a_{exp}$) < ALLOWABLE DEFECT DIMENSION ($a_0$)?

NO

S5
| CORRECT BUILDING CONDITIONS | CORRECT BUILDING PLAN | INSERT REPAIRING STEP |

YES

S6
ARE ALL PATHS COMPLETED?

NO

YES

END

EP 4 494 874 A1

# FIG. 4

## FIG. 5

## FIG. 6

## FIG. 7A

## FIG. 7B

## FIG. 8A

## FIG. 8B

| INTERNATIONAL SEARCH REPORT | International application No. |
|---|---|
| | **PCT/JP2023/014151** |

**A. CLASSIFICATION OF SUBJECT MATTER**

*B33Y 10/00*(2015.01)i; *B33Y 30/00*(2015.01)i; *B33Y 50/00*(2015.01)i; *B33Y 50/02*(2015.01)i; *B23K 9/04*(2006.01)i;
*B23K 31/00*(2006.01)i; *B22F 10/80*(2021.01)i
FI:     B23K9/04 G; B23K9/04 Z; B23K31/00 L; B23K31/00 D; B23K31/00 Z; B33Y50/00; B33Y50/02; B33Y10/00;
         B33Y30/00; B22F10/80

According to International Patent Classification (IPC) or to both national classification and IPC

**B. FIELDS SEARCHED**

Minimum documentation searched (classification system followed by classification symbols)

B33Y10/00; B33Y30/00; B33Y50/00; B33Y50/02; B23K9/04; B23K31/00; B22F10/80

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2021-9126 A (JTEKT CORP.) 28 January 2021 (2021-01-28)<br>entire text, all drawings | 1-27 |
| A | WO 2022/019120 A1 (KOBE STEEL, LTD.) 27 January 2022 (2022-01-27)<br>entire text, all drawings | 1-27 |
| A | WO 2020/129618 A1 (PANASONIC INTELLECTUAL PROPERTY MANAGEMENT CO.,<br>LTD.) 25 June 2020 (2020-06-25)<br>entire text, all drawings | 1-27 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **23 May 2023** | **06 June 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

| INTERNATIONAL SEARCH REPORT | | | International application No. |
|---|---|---|---|
| Information on patent family members | | | **PCT/JP2023/014151** |

| Patent document cited in search report | | | Publication date (day/month/year) | Patent family member(s) | | Publication date (day/month/year) |
|---|---|---|---|---|---|---|
| JP | 2021-9126 | A | 28 January 2021 | (Family: none) | | |
| WO | 2022/019120 | A1 | 27 January 2022 | JP 2022-20392 A<br>entire text, all drawings | | |
| WO | 2020/129618 | A1 | 25 June 2020 | US 2021/0308782 A1<br>entire text, all drawings<br>EP 3900871 A1 | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019194031 A
- JP 2022069534 A